# EUROPEAN PATENT APPLICATION

(11) **EP 2 781 385 A2**
(43) Date of publication of application: **24.09.2014**
(21) Application number: 14160858.8
(22) Date of filing: 20.03.2014
(51) Int. Cl.: B60J 7/22

(54) **Wind deflector for vehicle**

(30) Priority: 21.03.2013 JP 2013058402
(71) Applicant: AISIN SEIKI KABUSHIKI KAISHA, Kariya-shi, Aichi-ken 448-8650 (JP)
(72) Inventor: Hiramatsu, Shinichi, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

A deflector apparatus for a vehicle includes a deflector (12) configured to project above a surface of the roof portion (10), arm portions (25) extending toward vehicle rear from end portions of the deflector (12), the arm portions (25) rotatably supported at rear end portions thereof by guide rails (14), and bending springs (30) positioned between the guide rails (14) and the arm portions (25). Each bending spring (30) includes a major arc tube portion (31) placed at a protrusion (27) protruding from the arm portion (25) so as to be rotatable thereat and a pair of spring portions (32, 33) respectively extending toward vehicle front from end portions of the major arc tube portion (31), the end portions spaced apart in a circumferential direction. Distal end portions (32a, 33a) of the spring portions (32, 33) make pressure contact with the guide rail (14) and the arm portion (25) so as to bias the deflector (12) to project above the surface of the roof portion (10) and to retain the deflector (12) in that state.

## Description

### TECHNICAL FIELD

This disclosure generally relates to a deflector apparatus for a vehicle.

### BACKGROUND DISCUSSION

A known deflector apparatus for a vehicle is disclosed in JP2006-168439A, hereinafter referred to as Reference 1. As Fig. 5 illustrates, the known deflector apparatus for a vehicle includes guide rails 91 extending in a vehicle frontward-rearward direction respectively positioned at the edge portions of an opening formed on the roof portion of a vehicle, the edge portions that are spaced apart in a vehicle width direction. A base member 92 is attached to each of the guide rails 91. A deflector 95 is arranged at the front edge portion of the opening. Arm portions 96 respectively extend in a vehicle rearward direction from the end portions of the deflector 95, the end portions that are spaced apart in the vehicle width direction. Each of the base members 92 rotatably supports the rear end portion of each of the arm portions 96.

Front guide members 93 are attached to a frame F. The frame F is integrated with the guide rails 91. Each of the front guide members 93 is rotatably connected to the front end portion of each of the arm portions 96 via a link 94 so as to retain the arm portion 96 and guides the arm portion 96 to rotate about a pivoting shaft at the base member 92. A bending spring 97 is a plate spring with a first end fixed to the base member 92 and the arm portion 96 is placed on a second end of the bending spring 97 to be slidable so that the arm portion 96 is constantly biased in an upward direction by the bending spring 97. Biased by the bending spring 97, the deflector 95 projects above a surface of the roof portion in conjunction with an opening operation of a movable panel that opens and closes the opening portion and is retained in that state.

Assumedly, the known deflector apparatus for a vehicle according to Reference 1 uses a screw, a rivet, or a similar fixing member to fix the first end of the bending spring 97 at the base member 92 to eliminate a clearance between the bending spring 97 and the base member 92 in order to restrain the bending spring 97, for example, from falling off and from lowering performance, for example, at the time of attaching the deflector 95 and at a time when operating the deflector 95. As a result, number of components increases.

In addition, the bending spring 97, which biases and retains the deflector 95, is forced to support the deflector 95 at a fixing portion, which is where the bending spring 97 is fixed on the base member 92. Accordingly, strength required for fixing the bending spring 97 at the fixing portion increases.

A need thus exists for a deflector apparatus for a vehicle that restrains number of components from increasing and that reduces strength required for fixing a bending spring that biases and retains a deflector.

### SUMMARY

A deflector apparatus for a vehicle includes a deflector configured to be positioned at a front edge portion of an opening formed on a roof portion of a vehicle, the deflector configured to extend in a direction conforming to an extending direction of the front edge portion of the opening, the deflector configured to project above a surface of the roof portion, a pair of arm portions respectively extending in a vehicle rearward direction from end portions of the deflector, the end portions spaced apart in a vehicle width direction, the pair of arm portions respectively configured to be rotatably supported at rear end portions thereof by a pair of guide rails, the pair of guide rails respectively extending in a vehicle frontward-rearward direction and respectively positioned at edge portions of the opening, the edge portions that are spaced apart in the vehicle width direction, and a pair of bending springs respectively configured to be positioned between the pair of guide rails and the pair of arm portions. Each of the bending springs includes a major arc tube portion placed at a protrusion protruding in the vehicle width direction from one of the guide rail and the arm portion so as to be rotatable at the protrusion. Each of the bending springs includes a pair of spring portions respectively extending in a vehicle frontward direction from end portions of the major arc tube portion, the end portions that are spaced apart in a circumferential direction, the pair of spring portions respectively including distal end portions at distal ends thereof making pressure contact with the guide rail and the arm portion, respectively, so as to bias the deflector in a direction that makes the deflector project above the surface of the roof portion and to retain the deflector projected above the surface of the roof portion.

Upon the arrangement described herewith, the bending spring is mounted by inserting the protrusion into the major arc tube portion and by making the distal end portions of the spring portions pressure contact with the guide rail and the arm portion, respectively. As a result, number of components may be reduced compared to, for example, an arrangement where a fixing member is used. In addition, the spring portions of the bending spring work together to bias the deflector in a direction that makes the deflector project above the surface of the roof portion and to retain the deflector projected above the surface of the roof portion. As a result, the spring portions substantially cancel the strength required by the bending spring to withstand in an upward-downward direction required to fix the bending spring thereat so that the strength required by the bending spring to withstand may be reduced to the strength required by the bending spring to withstand a vehicle rearward force at the major arc tube portion. Accordingly, the strength required for fixing the bending spring may be reduced. Note that a major arc refers to an arc of a circle that is larger than a semicircle of the circle. The major arc tube portion is placed at the protrusion so as to be rotatable at the protrusion. More specifically, the major arc tube portion may be arranged so as to rotate around the entire circumference of the protrusion or may be arranged so as to rotate within a predetermined range of the circumference of the protrusion.

According to another aspect of this disclosure, the spring portion of the deflector apparatus for a vehicle includes a gradual change portion where a width of the spring portion gradually narrows as the gradual change portion extends toward the distal end portion of the spring portion.

Gradually narrowing the width of the spring portion toward the distal end portion of the spring portion at the gradual change portion may increase the strength of the spring portion at the proximal end, which is at the root of the spring portion, relative to the strength at the distal end of the spring portion. A distance in the upward-downward direction between the proximal ends of the spring portions is short. Nevertheless, by making resilient deformation at the proximal end difficult, the spring portions are restrained from interfering with each other.

According to further aspect of this disclosure, the spring portions of the deflector apparatus for a vehicle include curved portions, respectively, the curved portions curved in directions that increase a distance between the spring portions.

Forming the spring portions including the curved portions, which are curved in the direction that increases the distance between the spring portions, increases a clearance defined in the upward-downward direction between the spring portion and the guide rail and between the spring portion and the arm portion. The guide rail and the arm portion are the portions where the distal end portions of the spring portions make pressure contact, respectively. The clearance is increased, particlularly around the middle portion of the spring portion in the longitudinal direction. Each of the spring portions is restrained from interfering with the guide rail or the arm portion so as to generate the biasing force without difficulty. In addition, the performance of the bending spring may be restrained from lowering.

According to another aspect of this disclosure, the bending spring of the deflector apparatus for a vehicle is a single component integrally including the major arc tube portion and the pair of spring portions.

Accordingly, number of components is reduced and efforts on mounting the bending spring on the deflector apparatus for a vehicle are reduced.

According to further aspect of this disclosure, the bending spring of the deflector apparatus for a vehicle is placed at the protrusion in a state where a clearance is defined between the major arc portion and the protrusion.

Accordingly, the strength the bending spring is required to withstand at the major arc tube portion is restrained from increasing.

According to another aspect of this disclosure, the bending spring of the deflector apparatus for a vehicle includes the pair of spring portions that are spaced apart in a vehicle upward-downward direction at proximal ends of the spring portions, the proximal ends that respectively connect to the end portions of the major arc tube portion, by a distance smaller than the outer diameter of the protrusion, in a state where the bending spring is mounted on the deflector apparatus for a vehicle.

Accordingly, the bending spring is restrained from pulled off in the vehicle rearward direction relative to the protrusion.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view drawing illustrating a roof portion;
Fig. 2 is a schematic top view drawing illustrating a deflector apparatus for a vehicle according to an embodiment;
Fig. 3A is a perspective view drawing illustrating the deflector apparatus for a vehicle according to the embodiment in a state where a deflector is deployed;
Fig. 3B is a perspective view drawing illustrating the deflector apparatus for a vehicle according to the embodiment in a state where the deflector is retracted;
Fig. 4 is a perspective view drawing illustrating a bending spring; and
Fig. 5 is a perspective view drawing illustrating a known deflector apparatus for a vehicle.

### DETAILED DESCRIPTION

A deflector apparatus for a vehicle according to an embodiment will be described. Note that a vehicle frontward-rearward direction is referred to as a frontward-rearward direction. An upward direction in a vehicle height direction, which serves as a vehicle upward-downward direction, is referred to as upward. A downward direction in the vehicle height direction is referred to as downward. An inward direction in a vehicle width direction toward a vehicle interior is referred to as a vehicle interior direction. An outward direction in the vehicle width direction toward a vehicle exterior is referred to as a vehicle exterior direction.

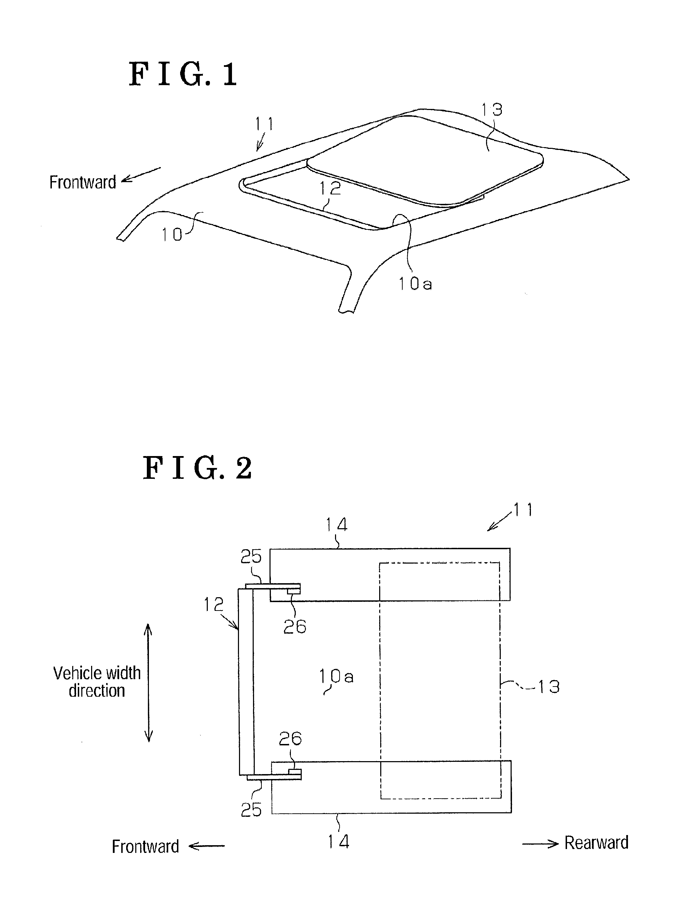

As Fig. 1 illustrates, an opening 10a formed substantially in a quadrilateral is formed on a roof portion 10 of a vehicle, for example, an automobile. A sunroof apparatus 11 is mounted at the opening 10a. The sunroof apparatus 11 includes a deflector 12 and a movable panel 13. The deflector 12, which extends in the vehicle width direction, is positioned at a front edge portion of the opening 10a and is retained thereat. The movable panel 13 opens and closes the opening 10a by moving in the frontward-rearward direction. The movable panel 13 is formed, for example, with a glass plate, which is formed substantially in a quadrilateral.

The deflector 12 is arranged so as to move upward with the rear portion of the deflector 12 as a center of rotation. In other words, the deflector 12 is arranged so as to make movement generally known as a tilt-up movement. The deflector 12 is released from a pushing force working from the direction of the movable panel 13 in response to an operation to open the movable panel 13, so that the deflector 12 makes a tilt-up movement and the deflector 12 projects above a top surface of the roof portion 10 so as to be in a state where the deflector 12 is deployed. The deflector 12 is pushed from the direction of the movable panel 13 in response to an operation to close the movable panel 13, so that the deflector 12 fits into a space at a position below the top surface of the roof portion 10 so as to be in a state where the deflector 12 is retracted. Deploying the deflector 12 at a time when the opening 10a is opened prevents an aerial vibration caused by sucking wind into an interior of a vehicle.

As Fig. 2 illustrates, the sunroof apparatus 11 includes a pair of guide rails 14. The pair of guide rails 14 are respectively positioned and fixed at edge portions of the opening 10a, the edge portions that are spaced apart in the vehicle width direction. Each guide rail 14 is formed, for example, by extrusion of an aluminum alloy material. Each guide rail 14 extends in the frontward-rearward direction. Each guide rail 14 is formed to have a unique cross sectional shape in a longitudinal direction. An appropriate driving mechanism slides on the guide rails 14 so as to drive the movable panel 13 to open and to close. At the front end portions of the guide rails 14, the end portions of the deflector 12, the end portions that are spaced apart in the vehicle width direction, are rotatably connected, respectively.

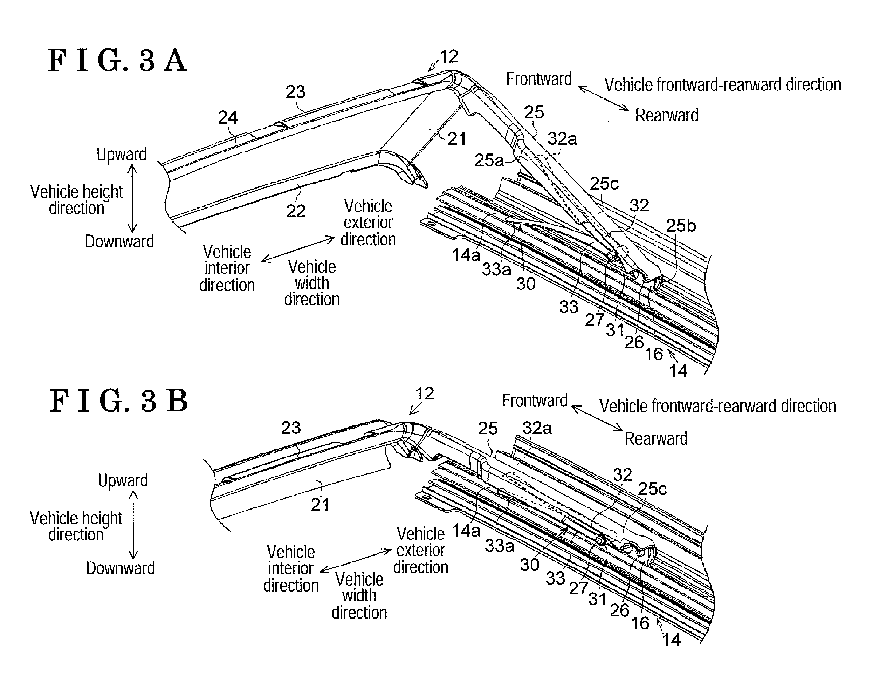

The deflector 12 and a structure to retain the deflector 12 will be more specifically described next. As Figs. 3A and 3B illustrate, the deflector 12 includes a mesh member 21 that extends in a vehicle width direction along the front edge portion of the opening 10a. The front edge portion of the opening 10a is at a vehicle frontward position relative to the guide rails 14. The mesh member 21, which is formed substantially in a belt form, is formed, for example, by a resin material. The deflector 12 further includes a lower frame 22, which is formed substantially in a stick form, formed, for example, by a resin material. The lower frame 22 extends in the vehicle width direction along the front edge portion of the opening 10a and is retained thereat. An edge portion of one end of the mesh member 21, which is one of the ends of the mesh member 21 spaced apart in a short direction of the mesh member 21, the end illustrated in a downward direction in Fig. 3A, is buried in the lower frame 22 for the entire length in a longitudinal direction of the mesh member 21 so as to be retained thereat.

The deflector 12 further includes an upper frame 23, which is formed, for example, by a resin material. The upper frame 23 integrally includes a frame portion 24 and arm portions 25. The frame portion 24 is formed substantially in a stick form and extends in the vehicle width direction along the front edge portion of the opening 10a. The arm portions 25 extend in a vehicle rearward direction from end portions of the frame portion 24 spaced apart in an extending direction of the frame portion 24, respectively. An edge portion of the other end of the mesh member 21, which is the other one of the ends of the mesh member 21 spaced apart in the short direction of the mesh member 21, the end illustrated in an upward direction in Fig. 3A, is buried in the frame portion 24 of the upper frame 23 for the entire length in a longitudinal direction of the mesh member 21 so as to be retained thereat.

A rearward portion of each arm portion 25 is formed substantially in a U-form by including a pair of vertical wall portions 25a, 25b facing each other and spaced apart in the vehicle width direction and a top panel portion 25c connecting between the upper edges of the vertical wall portions 25a, 25b in the vehicle width direction. The vertical wall portion 25b is the vertical wall portion at a position in the vehicle exterior direction. The vertical wall portion 25a is the vertical wall portion at a position in the vehicle interior direction. A shaft portion 26, which is formed substantially in a solid cylinder form, protrudes in the vehicle interior direction from the rear end portion of the vertical wall portion 25b at a portion corresponding to a cut out portion formed on the vertical wall portion 25a. In addition, a protrusion 27, which is formed substantially in a solid cylinder form, protrudes in the vehicle interior direction from a portion of the vertical wall portion 25b at a position in a vehicle frontward direction relative to the shaft portion 26.

The arm portions 25 are respectively retained by the guide rails 14 so as to be rotatable about the shaft portions 26. Accordingly, the upper frame 23 is retained by the guide rails 14 so as to be rotatable about the shaft portions 26. More specifically, an attaching portion 16, which is formed substantially in a tongue piece form and protruding upwardly, is provided on each of the guide rails 14. The shaft portions 26 are respectively inserted through the attaching portions 16 and arranged to be restrained from being pulled off so that the arm portions 25 are respectively retained by the guide rails 14 so as to be rotatable at the attaching portions 16.

As a result, as Fig. 3A illustrates, when the upper frame 23 rotates in a direction to move the upper frame 23 upward with the shaft portion 26 as the center of rotation, the mesh member 21, which is fixed to the lower frame 22 and the frame portion 24 of the upper frame 23 at the edge portions, is extended in the short direction of the mesh member 21 so that the deflector 12 is deployed so as to project above a surface of the roof portion 10. On the other hand, as Fig. 3B illustrates, when the upper frame 23 rotates in a direction to move the upper frame 23 downward with the shaft portion 26 as the center of rotation, the mesh member 21, which is fixed to the lower frame 22 and the upper frame 23 at the edge portions, is shortened, or folded, in the short direction of the mesh member 21 so that the deflector 12 is retracted so as to fit into a space at a position below the top surface of the roof portion 10.

Furthermore, each of the guide rails 14 includes a flange 14a formed substantially in an elongated form extending in the frontward-rearward direction at a position adjacent to the attaching portions 16, which is the position in the vehicle interior direction of the attaching portions 16. Each of the flanges 14a faces the top plate portion 25c of the arm portion 25 in the upward-downward direction. A bending spring 30, which is formed, for example, by a spring steel plate, is positioned between the flange 14a of the guide rail 14 and the top plate portion 25c of the arm portion 25.

More specifically, the bending spring 30 integrally includes a major arc tube portion 31 and a pair of spring portions 32, 33 paired as an upward portion and a downward portion. The major arc tube portion 31 is the portion mounted at the protrusion 27 so as to be rotatable. The pair of spring portions 32, 33 respectively extend in the vehicle frontward direction from the end portions of the major arc tube portion 31, the end portions that are spaced apart in a circumferential direction. The bending spring 30 as a whole is bent and deformed in a direction to close a clearance between the spring portions 32, 33 with the major arc tube portion 31 as an origin. Each of the spring portion 32 and the spring portion 33 is formed with a curved surface at the distal end thereof, which is the frontward end, by bending the distal end in a direction to approach each other to form a distal end portion 32a on the spring portion 32 and a distal end portion 33a on the spring portion 33. An upper surface of the distal end portion 32a is made to pressure contact with the top plate portion 25c and a lower surface of the distal end portion 33a is made to pressure contact with the flange 14a.

As a result, when the bending spring 30 is released from an external force that bends and deforms the spring portions 32, 33 in the direction to reduce the clearance between the spring portions 32, 33 so as to close the bending spring 30 as a whole, the spring portions 32, 33 are resiliently restored in a direction to increase the clearance between the spring portions 32, 33 so as to open the bending spring 30 as a whole while making the distal end portions 32a, 33a slide on the top plate portion 25c and the flange 14a. Accordingly, the upper frame 23 and the arm portions 25, which are biased by the bending springs 30, rotate in a direction to move the upper frame 23 and the arm portions 25 upward with the shaft portion 26 as the center of rotation.

On the other hand, in a state where the bending spring 30 is applied with an external force to rotate the upper frame 23 move downward with the shaft portion 26 as the center of rotation, the spring portions 32, 33 are resiliently deformed in a direction to reduce the clearance between each other so as to close the bending spring 30 as a whole while making the distal end portions 32a, 33a slide on the top plate portion 25c and the flange 14a.

In a state where the bending spring 30 is bent and deformed at the spring portions 32, 33 in a direction to increase or to reduce the clearance between the spring portions 32, 33 so as to open or to close the bending spring 30 as a whole, the bending spring 30 slides on the protrusion 27 while rotating about the protrusion 27 at the major arc tube portion 31. A clearance is defined between the major arc tube portion 31 and the protrusion 27 so that, for example, the major arc tube portion 31 is restrained from squeezing the protrusion 27 in a direction to decrease a diameter of the protrusion 27 even in a state where the deflector 12 is retracted.

Note that the bending spring 30 is applied with the external force or is released from the external force in response to an operation to open or close the movable panel 13. The bending spring 30 will be described in further detail next.

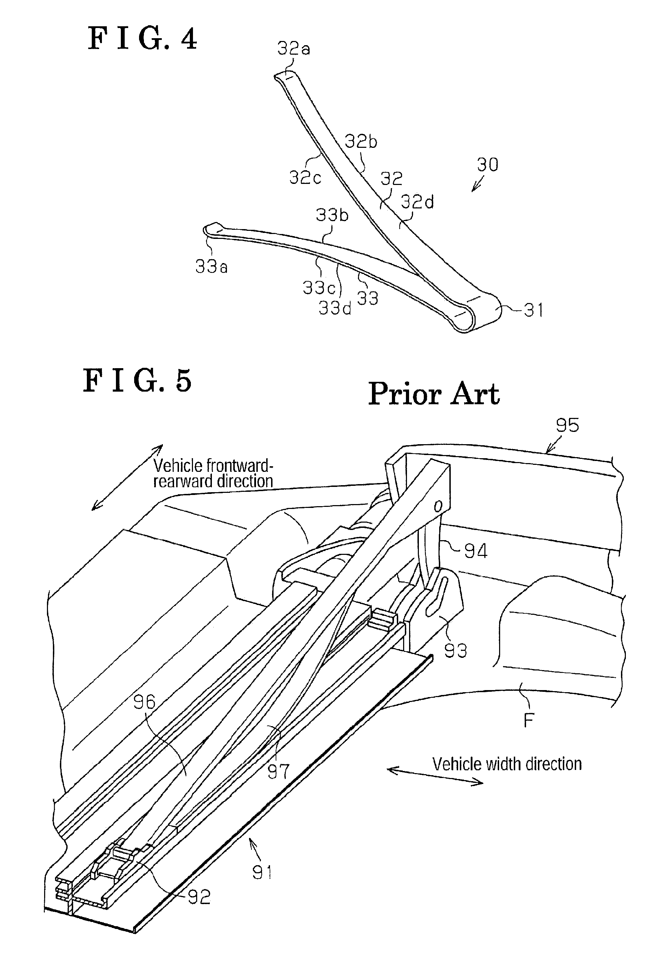

As Fig. 4 illustrates, at the edge portions of the spring portion 32 spaced apart in a width direction thereof, gradual change portions 32b, 32c are formed. The gradual change portions 32b, 32c are slanted toward each other so that edge portions of the spring portion 32 gradually approach each other as the gradual change portion 32b, 32c extends toward the distal end portion 32a of the spring portion 32. Similarly, at the edge portions of the spring portion 33 spaced apart in a width direction thereof, gradual change portions 33b, 33c are formed. The gradual change portions 33b, 33c are slanted toward each other so that the edge portions of the spring portion 33 gradually approach each other as the gradual change portion 33b, 33c extends toward the distal end portion 33a of the spring portion 33. Upon the arrangement described herewith, strength at the proximal end of each of the spring portions 32, 33, which is at the root of each of the spring portions 32, 33, may be increased relative to the strength at the distal end of each of the spring portions 32, 33. A distance in the vehicle upward-downward direction between the proximal ends of the spring portions 32, 33 is short. Nevertheless, by making resilient deformation at the proximal end difficult, the spring portions 32, 33 are restrained from interfering with each other. In addition, the bending spring 30 is provided with the spring portions 32, 33 that are spaced apart in the vehicle upward-downward direction at the proximal ends of the spring portions 32, 33 that connect to the end portions of the major arc tube portion 31, respectively, by a distance smaller than the outer diameter of the protrusion 27. As a result, the bending spring 30 is restrained from pulled off in the vehicle rearward direction relative to the protrusion 27.

Curved portions 32d, 33d are formed on the spring portions 32, 33, respectively. Each of the curved portions 32d, 33d is formed such that each of the spring portions 32, 33 rolls back in a longitudinal direction of the spring portions 32, 33 so as to increase distance between the spring portions 32, 33 as a whole. In other words, the spring portion 32 and the spring portion 33 are curved in opposing directions by the curved portion 32d and the curved portion 33d. Upon such arrangement, the clearance in the upward-downward direction between the spring portion 32 and the top plate portion 25c and the clearance in the upward-downward direction between the spring portion 33 and the flange 14a are increased, particularly at the middle portions of the spring portions 32, 33 in the longitudinal direction. The top plate portion 25c is where the distal end portion 32a of the spring portion 32 makes pressure contact and the flange 14a is where the distal end portion 33a of the spring portion 33 makes pressure contact.

An operation of the deflector apparatus for a vehicle according to the embodiment will be described next. As Fig. 3A illustrates, the bending spring 30 may be mounted, for example, by inserting the protrusion 27 into the major arc tube portion 31 and by making the distal end portion 32a of the spring portion 32 pressure contact with the top plate portion 25c and by making the distal end portion 33a of the spring portion 33 pressure contact with the flange 14a while the rear end portion of the arm portion 25 is rotatably supported by the guide rail 14. As a result, number of components is reduced compared to an arrangement where a fixing member is used.

In addition, the spring portions 32, 33 of the bending spring 30 work together to bias the upper frame 23 of the deflector 12 in a direction to make the upper frame 23 of the deflector 12 project above the surface of the roof portion 10 and to retain the upper frame 23 of the deflector 12 projected above the surface of the roof portion 10. As a result, the spring portions 32, 33 substantially cancel the strength required by the bending spring 30 to withstand in the upward-downward direction required to fix the bending spring 30 thereat so that the strength required by the bending spring 30 to withstand may be reduced to the strength required by the bending spring 30 to withstand a vehicle rearward force at the major arc tube portion 31, which is the strength at the major arc tube portion 31 for restraining the bending spring 30 from being pulled off. Accordingly, the strength required for fixing the bending spring 30 may be reduced.

Upon the arrangement described herewith, the deflector apparatus for a vehicle according to the embodiment is advantageous in following respects. First, the deflector apparatus for a vehicle according to the embodiment may be restrained from increasing number of components for mounting the bending spring 30. In addition, the deflector apparatus for a vehicle according to the embodiment may reduce strength required for fixing the bending spring 30 that biases and retains the deflector 12.

Second, the deflector apparatus for a vehicle according to the embodiment is formed with the gradual change portions 32b, 32c on the spring portion 32, the gradual change portions 32b, 32c gradually narrowing width of the spring portion 32 as the spring portion 32 extends toward the distal end of the spring portion 32. Furthermore, the deflector apparatus for a vehicle according to the embodiment is formed with the gradual change portions 33b, 33c on the spring portion 33, the gradual change portions 33b, 33c gradually narrowing width of the spring portion 33 as the spring portion 33 extends toward the distal end of the spring portion 33. Upon the arrangement described herewith, the strengths at the proximal end portions of the spring portions 32, 33, which are root portions of the spring portions 32, 33 may be increased relative to the strengths at the distal ends of the spring portions 32, 33. Accordingly, resilient deformation at the proximal end portions becomes difficult. A distance in an upward-downward direction between the proximal end portions of the spring portions 32, 33 is short. Nevertheless, the spring portions 32, 33 are restrained from interfering with each other.

Third, each of the spring portions 32, 33 of the deflector apparatus for a vehicle according to the embodiment is formed with a curved portion 32d, 33d curving in a direction to increase distance between the spring portions 32, 33. Upon the arrangement described herewith, the clearance in the upward-downward direction between the spring portion 33 and the flange 14a of the guide rail 14 and the clearance in the upward-downward direction between the spring portion 32 and the top plate portion 25c of the arm portion 25 are increased, particularly around the middle portions of the spring portions 32, 33 in the longitudinal direction. The top plate portion 25c is where the distal end portion 32a of the spring portion 32 makes pressure contact and the flange 14a is where the distal end portion 33a of the spring portion 33 makes pressure contact. Furthermore, each of the spring portions 32, 33 is restrained from interfering with the guide rail 14 and the arm portion 25 so that the biasing force is generated without difficulty. Accordingly, performance of the bending spring 30 may be restrained from lowering.

Fourth, in the deflector apparatus for a vehicle according to the embodiment, the strength for the bending spring 30 to withstand the vehicle rearward force, which is the strength to restrain the bending spring 30 from pulled off, may be easily adjusted by changing an opening distance of the major arc tube portion 31 between the end portions of the major arc tube portion 31, the end portions that are spaced apart in the circumferential direction and without, for example, changing a material used for the bending spring 30. Note that an example of a material used for the bending spring 30 is a spring steel plate.

The deflector apparatus for a vehicle according to the embodiment may be altered in following manners. Alternatively, the curved portions 32d, 33d of the spring portions 32, 33 may be omitted so that the spring portions 32, 33 may extend straight in the longitudinal direction. Furthermore, the curved surface formed at each of the distal end portions 32a, 33a may be omitted. Alternatively, the spring portions 32, 33 may be curved at the curved portions 32d, 33d in a direction so as to close a clearance between the spring portions 32, 33 so that the spring portions 32, 33 are formed so as to approach each other in the longitudinal direction as a whole.

Alternatively, one of the gradual change portions 32b, 32c of the spring portion 32 in the deflector apparatus for a vehicle according to the embodiment may be omitted. Furthermore, each of the gradual change portions 32b, 32c of the spring portion 32 in the deflector apparatus for a vehicle according to the embodiment may be omitted. In other words, the spring portion 32 may be provided with a constant width throughout in the longitudinal direction.

Similarly, one of the gradual change portions 33b, 33c of the spring portion 33 in the deflector apparatus for a vehicle according to the embodiment may be omitted. Furthermore, each of the gradual change portions 33b, 33c of the spring portion 33 in the deflector apparatus for a vehicle according to the embodiment may be omitted. In other words, the spring portion 33 may be provided with a constant width throughout in the longitudinal direction.

The deflector apparatus for a vehicle according to the embodiment may be altered such that the protrusion 27 of the arm portion 25 may be positioned at a position in a vehicle rearward direction relative to the shaft portion 26. Alternatively, the protrusion 27 of the arm portion 25 may be positioned coaxial with the shaft portion 26. In a state where the protrusion 27 of the arm portion 25 is positioned coaxial with the shaft portion 26, the structure of the deflector apparatus for a vehicle may be simplified as a result of, for example, sharing the shaft portion 26 as the protrusion 27.

The deflector apparatus for a vehicle according to the embodiment may be altered such that the protrusion 27 supporting the major arc tube portion 31 of the bending spring 30 may be arranged to protrude from the guide rail 14 instead of being arranged to protrude from the arm portion 25. Furthermore, the bending spring 30 of the deflector apparatus for a vehicle according to the embodiment, which is formed by a spring steel plate, may be formed alternatively by a wire material.

The deflector 12 of the deflector apparatus for a vehicle according to the embodiment includes a mesh member 21 extending and contracting between the lower frame 22 and the frame portion 24 of the upper frame 23. Alternatively, instead of the deflector 12 including the mesh member 21, the deflector may include, for example, a panel in an elongating form formed by resin and connecting between the lower frame 22 and the upper frame 23.

Alternatively, the deflector apparatus for a vehicle according to the embodiment may include a rib formed on the protrusion 27, the rib extending frontward from the outer circumferential surface of the protrusion 27, the outer circumferential surface in the radial direction, the rib facing the lower surface of the spring portion 32 and the upper surface of the spring portion 33. Upon the arrangement described herewith, the upper surface of the spring portion 33 makes contact with the rib and the rib restrains downward rotation of the bending spring 30. Accordingly, the arm portion 25 may be mounted on the guide rail 14 in a state where the bending spring 30 is temporarily retained by the arm portion 25. As a result, mountability of the arm portion 25 may be enhanced.

## Claims

1. A deflector apparatus for a vehicle comprising:
a deflector (12) configured to be positioned at a front edge portion of an opening (10a) formed on a roof portion (10) of a vehicle, the deflector (12) configured to extend in a direction conforming to an extending direction of the front edge portion of the opening (10a), the deflector (12) configured to project above a surface of the roof portion (10);
a pair of arm portions (25) respectively extending in a vehicle rearward direction from end portions of the deflector (12), the end portions spaced apart in a vehicle width direction, the pair of arm portions (25) respectively configured to be rotatably supported at rear end portions thereof by a pair of guide rails (14), the pair of guide rails (14) respectively extending in a vehicle frontward-rearward direction and respectively positioned at edge portions of the opening (10a), the edge portions that are spaced apart in the vehicle width direction; and
a pair of bending springs (30) respectively configured to be positioned between the pair of guide rails (14) and the pair of arm portions (25), wherein
each of the bending springs (30) includes a major arc tube portion (31) placed at a protrusion (27) protruding in the vehicle width direction from one of the guide rail (14) and the arm portion (25) so as to be rotatable at the protrusion (27), wherein
each of the bending springs (30) includes a pair of spring portions (32, 33) respectively extending in a vehicle frontward direction from end portions of the major arc tube portion (31), the end portions that are spaced apart in a circumferential direction, the pair of spring portions (32, 33) respectively including distal end portions (32a, 33a) at distal ends thereof making pressure contact with the guide rail (14) and the arm portion (25), respectively, so as to bias the deflector (12) in a direction that makes the deflector (12) project above the surface of the roof portion (10) and to retain the deflector (12) projected above the surface of the roof portion (10).

2. The deflector apparatus for a vehicle according to Claim 1, wherein the spring portion (32, 33) includes a gradual change portion (32b, 32c, 33b, 33c) where a width of the spring portion (32, 33) gradually narrows as the gradual change portion (32b, 32c, 33b, 33c) extends toward the distal end portion (32a, 33a) of the spring portion (32, 33).

3. The deflector apparatus for a vehicle according to Claim 1 or 2, wherein the spring portions (32, 33) include curved portions (32d, 33d), respectively, the curved portions (32d, 33d) curved in directions that increase a distance between the spring portions (32, 33).

4. The deflector apparatus for a vehicle according to Claims 1 through 3, wherein the bending spring (30) is a single component integrally including the major arc tube portion (31) and the pair of spring portions (32, 33).

5. The deflector apparatus for a vehicle according to Claims 1 through 4, wherein the bending spring (30) is placed at the protrusion (27) in a state where a clearance is defined between the major arc portion (31) and the protrusion (27).

6. The deflector apparatus for a vehicle according to Claims 1 through 5, wherein the bending spring (30) includes the pair of spring portions (32, 33) that are spaced apart in a vehicle upward-downward direction at proximal ends of the spring portions (32, 33), the proximal ends that respectively connect to the end portions of the major arc tube portion (31), by a distance smaller than the outer diameter of the protrusion (27), in a state where the bending spring (30) is mounted on the deflector apparatus for a vehicle.
